# EUROPEAN PATENT SPECIFICATION

(11) **EP 0 846 588 B1**
(45) Date of publication and mention of the grant of the patent: **10.04.2002**
(21) Application number: 97121262.6
(22) Date of filing: 03.12.1997
(51) Int. Cl.: B60K 35/00

(54) **Vehicle display device**
Fahrzeug- Anzeigegerät
Dispositif d'affichage de véhicule

(30) Priority: 04.12.1996 IT TO960982
(43) Date of publication of application: 10.06.1998
(73) Proprietor: C.R.F. Società Consortile per Azioni, 10043 Orbassano (Torino) (IT)
(72) Inventor: Damiani, Sergio, 10134 Torino (IT); Deregibus, Enrica, 10137 Torino (IT); Dosio, Norberto, 10137 Torino (IT)
(74) Representative: Jorio, Paolo

(56) References cited:
- EP-A- 0 672 892
- EP-A- 0 704 675
- DE-A- 4 218 804
- FR-A- 2 667 026
- US-A- 5 239 700

## Description

The present invention relates to a vehicle display device.

As is known, currently used vehicle display devices comprise analog or digital on-vehicle instruments normally indicating quantities such as vehicle speed, engine speed, fuel level, etc.; and a number of optical indicators showing various vehicle states, such as lights on, engine oil level, cooling water temperature, etc.

Most analog instruments comprise, for each display quantity, a needle gauge showing the value of the quantity on a graduated scale normally comprising a number of numeric characters, the size and style of which are determined at the instrument design stage, while optical indicators normally comprise standard rear-lighted graphic symbols, each indicating a respective vehicle state.

Most digital instruments comprise, for each display quantity, an indicator comprising an LCD (Liquid Crystal Display) or a number of light-emitting elements (LEDs), which may be illuminated selectively to form a numeric character indicating the value of the quantity in a respective unit of measurement, or sequentially to indicate the level of the quantity on a graduated scale similar to that of analog instruments.

The instrument character size and style and the size of the optical indicator graphic symbols are not always suitable in terms of visibility by the driver, whose eyesight may be impaired by disease or age, and which normally worsens with advancing years.

Moreover, the colour and background contrast of the characters and graphic symbols do not always allow of immediate interpretation by the driver in different outside light conditions, as in strong sunlight.

Also, as the on-vehicle instruments and optical indicators are defined at the vehicle design stage, currently used display devices do not permit later extensions to cater to functions not provided for at the device design stage, such as navigational systems indicating the on-road location of the vehicle, road traffic indicating systems, etc.

Known display devices therefore fail to adapt to the personal visual requirements of the driver, and to allow of later additions to accommodate functions not provided for at the vehicle design stage.

FR-A-2667026 containing the features of the preamble of independent claim 1, discloses a dashboard display panel for a vehicle, including two liquid crystal displays and a device for programming the displays. The programming device includes a memory storing a number of possible configurations, from which a required configuration may be selected. The variations may affect the position, the dimension and the colour of the display of items of information on the liquid crystal displays and the units in which the quantities are measured.

EP-A-672892 discloses an on-vehicle data processing system responsive to the speed of the vehicle and comprising an on-vehicle display device on which running mode images indicating running states of the vehicle are displayed when the vehicle is in the running mode and stop mode images indicating detailed vehicle information are displayed when the vehicle is in the stop mode. Furthermore, larger characters are displayed in the running mode and smaller characters are displayed in the stopping mode; in such a way, the driver can more easily view the running mode images indicating the vehicle running states in real time, whereas in the stop mode the details of the vehicle information can be displayed with full consideration given to their contents.

It is an object of the present invention to provide a display device designed to overcome the limitations typically associated with known devices.

According to the present invention there is provided a vehicle display device, as defined in claim 1.

A preferred, non-limiting embodiment of the present invention will be described by way of example with reference to the accompanying drawings, in which:
Figure 1 shows a schematic view of a vehicle featuring the display device according to the present invention;
Figure 2 shows a block diagram of the Figure 1 device;
Figure 3 shows a flow chart of operations performed by the Figure 2 display device;
Figures 4-12 show various vehicle instrument representations obtainable using the device according to the present invention.

The present invention is based on the principle of replacing traditional on-vehicle analog or digital. instruments and optical indicators with a display device comprising one or more screens, which may be modified as regards display parameters, are installed on the vehicle instrument panel, and on which the instrument gauges and optical indicators are represented graphically.

When the vehicle is stopped, each instrument gauge and each optical indicator shown on the screens may be adapted freely according to the preference of the driver, using a "mouse" adjacent to the gear lever, and which provides for selecting from various menu items on the screens, and so customizing the information displayed.

More specifically, the "mouse" provides not only for selecting which gauges and which optical indicators to display, but also for modifying the display parameters of each, such as display type, size, colour and style.

For example, it is possible to display the speedometer and engine speed indicator or the speedometer and clock, etc.; a digital as opposed to analog engine speed indicator; large as opposed to small speedometer and engine speed indicator characters; a red as opposed to green speedometer scale; and so on for each display parameter of any of the information shown.

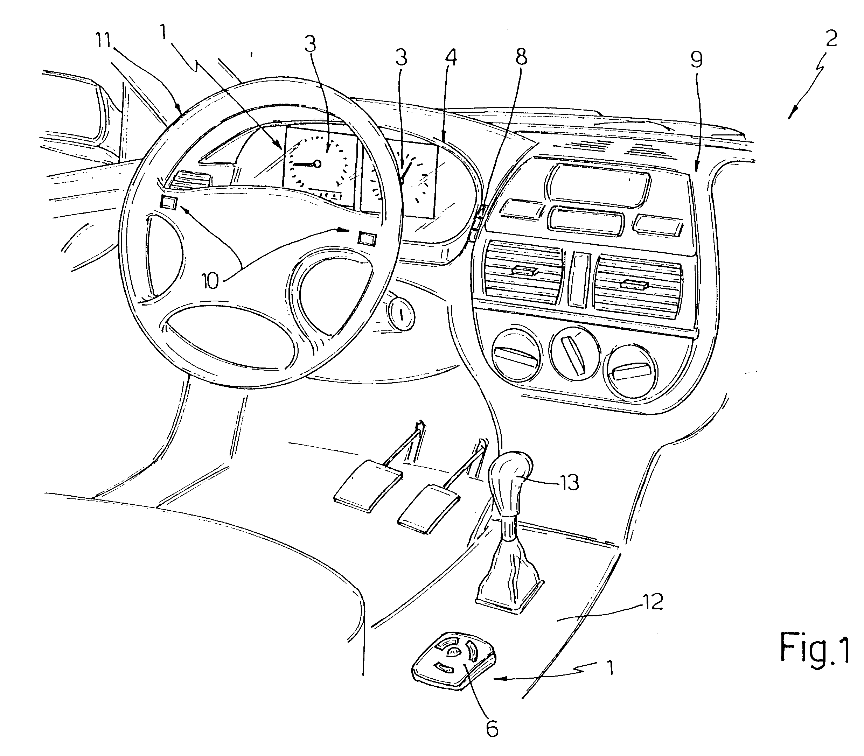

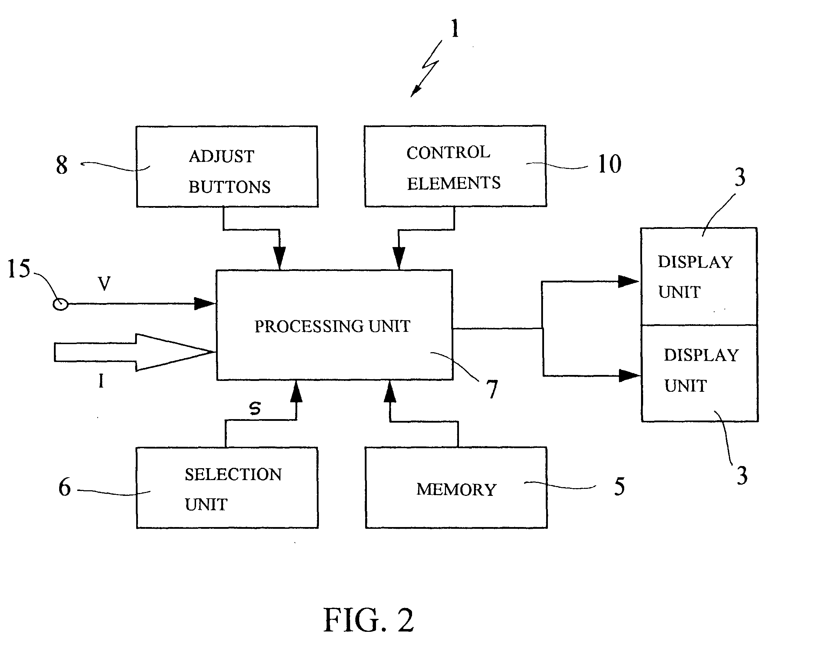

Number 1 in Figures 1 and 2 indicates a display device in accordance with the present invention. More specifically, Figure 1 shows part of the passenger compartment of a vehicle 2 featuring display device 1, while Figure 2 shows a block diagram of display device 1.

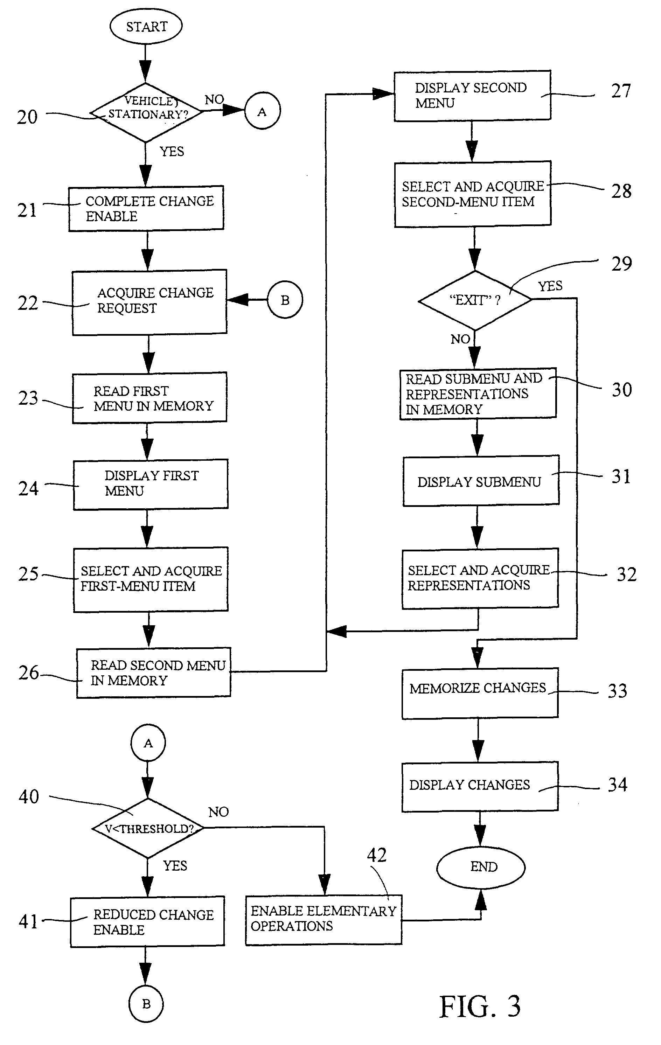

As shown in Figures 1 and 2, display device 1 comprises a pair of liquid crystal, colour display units 3 on the dashboard 4 of vehicle 2; a memory 5 containing a number of graphic representations of each instrument gauge and each optical indicator; a data selection unit 6 generating a number of selection signals S indicating the selections made, and by which the driver selects the instrument gauge and optical indicator representations for display; and a processing unit 7 connected to memory 5 and data selection unit 6, and which provides for performing the operations described in detail with reference to Figure 3 to enable the driver to modify the instrument and optical indicator representations on display units 3.

More specifically, for each instrument gauge and each optical indicator that can be shown on display units 3, memory 5 stores a corresponding number of predetermined gauge or optical indicator representations obtainable by varying the aforementioned display parameters, and which are shown on display units 3.

Data selection unit 6 comprises a "track-ball mouse" fitted to the central tunnel 12 of vehicle 2 supporting the gear lever 13, and located behind gear lever 13 in an easily accessible position by the driver; and the pair of liquid crystal display units 3 comprise respective adjacent liquid crystal screens on dashboard 4 of vehicle 2, each with a substantially rectangular display surface of about 5.7 inches in diagonal.

Display device 1 also comprises a number of push-buttons 8 located on the instrument panel 9 of vehicle 2, adjacent to dashboard 4 of vehicle 2, and connected to processing unit 7 to enable the driver to make normally infrequent adjustments, such as resetting the odometer, adjusting the brightness of the graphic representations on display units 3, etc.

Display device 1 also comprises further control elements 10, e.g. toggle switches, push-buttons, knobs, etc., located on the steering wheel 11 of vehicle 2 and connected to processing unit 7 to enable the driver, in particular running conditions of vehicle 2, to select and activate elementary functions of vehicle 2, as described in detail later on.

Processing unit 7 also receives a moving-vehicle signal, e.g. a speed signal V indicating the speed of vehicle 2, generated by an engine central control unit 15; and a number of information signals I indicating the state of vehicle 2 and generated by respective sensors (not shown) on vehicle 2.

As described in detail later on, processing unit 7 enables different sets of driver-performable operations according to the value of speed signal V, and, on the basis of information signals I, provides for real-time changing the graphic representations of the instrument gauges and optical indicators shown on display units 3.

Purely by way of example, information signals I may comprise an engine speed signal, a fuel level signal, an engine oil level signal, a cooling fluid temperature signal, etc.; and processing unit 7 uses these signals to modify the instantaneous vehicle speed, engine speed, fuel level readings, etc. on display units 3.

With reference to Figure 3, a description will now be given of the operations performed by the driver of vehicle 2, and those performed accordingly by processing unit 7 to adapt the information shown on display units 3.

To begin with, processing unit 7 determines, on the basis of speed signal V, whether vehicle 2 is stationary (block 20).

If vehicle 2 is stationary (YES output of block 20), processing unit 7 enables a change in representation of the currently displayed instrument gauges and optical indicators (block 21). Conversely, if vehicle 2 is moving (NO output of block 20), processing unit 7 disables the above operations, and only enables a small number of operations as described in detail later on with reference to blocks 40-42.

The purpose of determining whether vehicle 2 is stationary and disabling any change in representation of the instrument gauges and optical indicators is to avoid distracting the driver when the vehicle is moving and so endangering his own safety and that of other road users. When the vehicle is moving, in fact, only a small number of operations, which do not involve distracting the driver's attention from the road, are permitted.

If change is enabled, the driver of vehicle 2 presses a button on "mouse" 6 to inform processing unit 7 of his intention to change the representation of the currently displayed instrument gauges and optical indicators, and "mouse" 6 generates a first selection signal S which is acquired by processing unit 7 (block 22).

Processing unit 7 then reads in memory 5 a first set of data associated with first selection signal S, namely a first menu containing a number of items indicating which instrument gauges and which optical indicators may be changed, and what further information may be displayed on display units 3 (block 23).

For example, the first menu may comprise items such as "speedometer", "engine speed indicator", "fuel level indicator", "water temperature indicator", "oil pressure indicator", etc.

Processing unit 7 then displays the first menu on display units 3 (block 24).

At this point, to indicate which currently displayed instrument gauge or optical indicator is to be changed, the driver selects one of the items in the first menu using "mouse" 6, and the selection is acquired by processing unit 7 (block 25). More specifically, "mouse" 6 generates a second selection signal S, which is acquired by processing unit 7.

Processing unit 7 then reads in memory 5 a second set of data associated with second selection signal S, i.e. with the instrument gauge or optical indicator selected by the driver. More specifically, processing unit 7 reads in memory 5 a second menu containing a number of items, each indicating a respective changeable display parameter (block 26).

Processing unit 7 then displays on a first of display units 3 the current representation of the instrument gauge or optical indicator selected in block 25, and displays the second menu on a second of display units 3 (block 27).

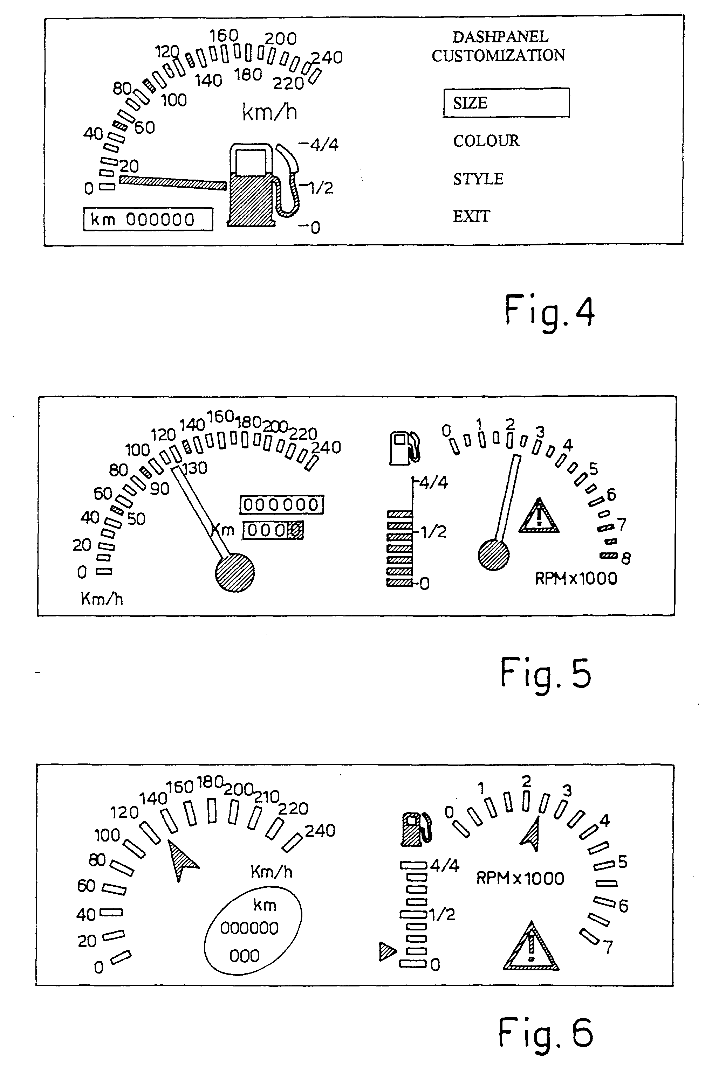

Figure 4 shows an example of what is displayed on display units 3 : on the left, a speedometer and fuel level indicator; and on the right, the second menu.

As shown in Figure 4, the second menu comprises the items "size", "colour", "style" and "exit" respectively indicating the possibility of changing the size of the instrument gauge and optical indicator display characters, changing the colour and background colour of the instrument gauges and optical indicators, changing the style with which the gauges and indicators are represented, and terminating the change operations and so memorizing and displaying the changes made.

At this point, to indicate which display parameter is to be changed, the driver selects one of the items in the second menu using "mouse" 6, and the selection is acquired by processing unit 7 (block 28). More specifically, "mouse" 6 generates a third selection signal S which is acquired by processing unit 7.

Processing unit 7 then determines which item in the second menu has been selected (block 29).

If the driver has selected the "exit" item (YES output of block 29), block 29 goes on to a block 33 described in detail later on. Conversely, if the driver has selected one of the other items (NO output of block 29), processing unit 7 reads in memory 5 a third set of data associated with third selection signal S, i.e. with the display parameter selected by the driver. More specifically, processing unit 7 reads in memory 5 a submenu containing a number of items, each indicating a respective operation to be performed; and a number of predetermined representations of the selected gauge or optical indicator, which may be obtained by varying the selected display parameter (block 30).

Processing unit 7 then displays the submenu on the second display unit 3 (block 31).

The submenu comprises the items "another" and "exit", indicating the possibility of selecting one of the predetermined representations of the selected gauge or optical indicator, obtainable by varying the selected display parameter, and the possibility of terminating the change operations relative to the selected display parameter and switching back to the second menu.

The submenu is so organized that, each time "another" is selected by the driver, the first display unit 3 displays a different representation of the gauge or optical indicator, and, by repeatedly selecting the same item in the submenu, the graphic representations are displayed cyclically one after the other.

Using "mouse" 6, the driver therefore selects the desired graphic representation of the gauge or optical indicator by repeatedly selecting the "another" item in the submenu, and then selects "exit"; and processing unit 7 acquires the graphic representation of the gauge or optical indicator selected by the driver (block 32). More specifically, "mouse" 6 generates a fourth selection signal S which is acquired by processing unit 7.

When "exit" is selected in the submenu, operation commences once more from block 27, in which processing unit 7 displays the second menu.

At this point, using "mouse" 6, the driver may select "exit" in the second menu to terminate any further change in the display parameters of the selected instrument gauge or optical indicator, or select one of the other items to change a further display parameter of the instrument gauge or optical indicator.

If one of the display parameter items in the second menu is selected, operation commences once more from block 30. Conversely, if "exit" is selected, processing unit 7 memorizes in memory 5 the graphic representations selected by the driver (block 33) and displays the representations on display units 3 (block 34).

Obviously, if "exit" is the first item selected by the driver, i.e. if no changes are made, the previous representations memorized in memory 5 are left unchanged and displayed once more.

The operations performed in blocks 22-34 may be repeated for each instrument gauge and each optical indicator to be changed.

Alternatively, the first menu may also comprise an "exit" item, in which case, the first menu is displayed when "exit" is selected in the second menu, and the driver may either select "exit" in the first menu to terminate any further change and display the selected representations, or select another item in the first menu relative to another instrument gauge or another optical indicator to be changed, and so repeat the operations in blocks 26-34.

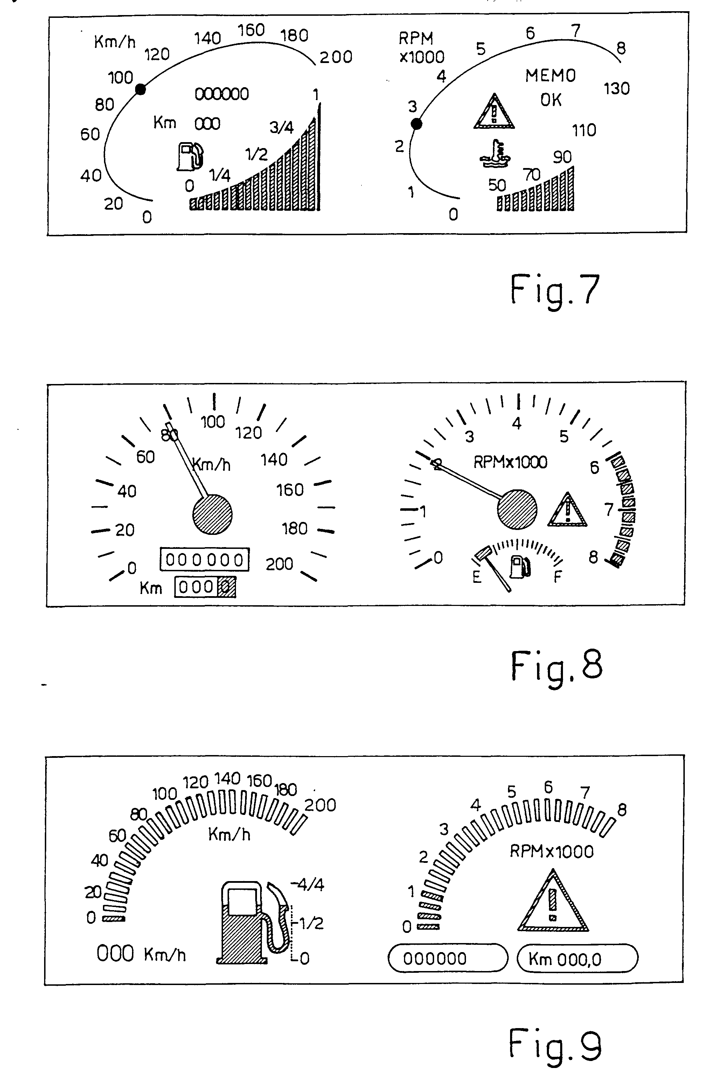

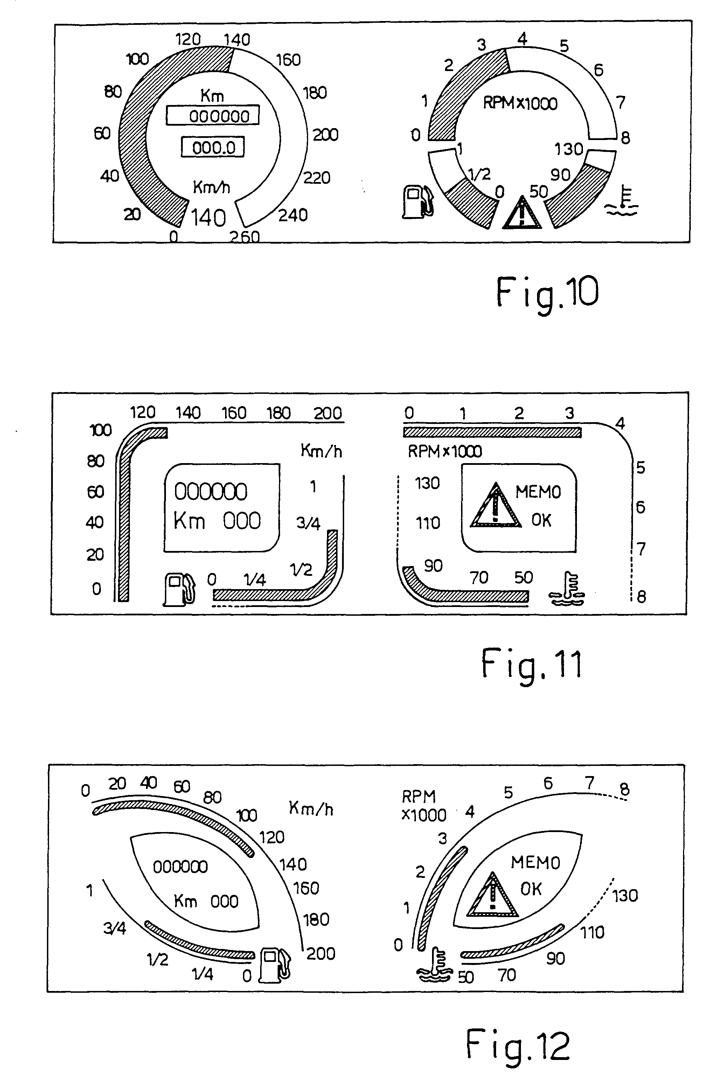

Figures 5-12 show just some of the instrument gauge and optical indicator graphic representations obtainable using display device 1 according to the present invention, and which, as can be seen, show analog, digital, and combined analog-digital instruments. The instruments and indicators displayed may comprise any combination of the gauges and indicators shown in Figures 5-12, as well as others not shown, the only limitation being that, for obvious reasons involving the safety of vehicle 2, certain gauges or indicators, such as the speedometer or the fault indicator on vehicle 2, cannot be eliminated from the display.

As stated, the operations in blocks 22-34 are only performed if vehicle 2 is stationary (YES output of block 20).

If vehicle 2 is moving (NO output of block 20), processing unit 7, as stated, disables any change in representation of the instrument gauges and optical indicators, and only enables a small number of operations which do not distract the driver's attention from the road (block 40).

The operations performed by processing unit 7 when vehicle 2 is moving commence by determining whether the speed of vehicle 2 is below a predetermined threshold value (block 40).

If the speed of vehicle 2 is below the threshold value (YES output of block 40), processing unit 7 enables only a small number of operations to avoid distracting the driver when the vehicle is moving (block 41). Block 41 goes on to block 22, and the operations in blocks 22-34, which will not be described again for the sake of simplicity, are repeated. It should be pointed out, however, that the operations performed in blocks 22-34 when vehicle 2 is moving differ from the operations performed in blocks 22-34 when vehicle 2 is stationary by the driver-selectable items in the menus only being selectable using control elements 10 on steering wheel 11, this to avoid distracting the attention of the driver of vehicle 2.

The operations performed in blocks 22-34 when vehicle 2 is moving also differ from the operations performed in blocks 22-34 when vehicle 2 is stationary by the first menu being reduced, i.e. containing fewer items than the first menu already described, and by each item in the first menu corresponding to a second menu comprising different items from those described previously.

For example, the reduced first menu may comprise items such as "radio" or "air conditioner" relative to control of the radio or air conditioner respectively; the second menu relative to the "radio" item may comprise items such as "volume", "mute", "high", "low", etc. indicating the possibility of adjusting the volume, turning off the sound, adjusting high and low pitch, etc.; and the second menu relative to the "air conditioner" item may comprise items such as "temperature", "recirculate", "up", "down", "front", etc. indicating the possibility of adjusting the set temperature, recirculating the air inside the passenger compartment, directing air flow up, down, towards the driver, etc.

Conversely, if the speed of vehicle 2 is above the threshold value (NO output of block 40), processing unit 7 disables the display of any type of menu and the use of "mouse" 6, and only allows the driver to perform elementary on-vehicle operations using control elements 10 on steering wheel 11, such as adjusting the volume of the radio directly from the steering wheel, turning off the sound of the radio ("mute"), recirculating air inside the passenger compartment, adjusting the air conditioner temperature, etc. (block 42).

Further operations not shown in Figure 3 may also be performed.

In particular, on the basis of incoming information signals I indicating the state of vehicle 2, processing unit 7 provides for real-time changing the graphic representations of the instrument gauges and optical indicators shown on display units 3.

For example, in the case of the vehicle speed indicator, processing unit 7 provides for real-time changing the vehicle speed reading according to the vehicle speed signal, that is, changes the position of the gauge needle on the graduated scale if an analog gauge is selected, or changes the number displayed if a digital gauge is selected.

The same applies to all the other indicators shown on display units 3.

Moreover, processing unit 7 also provides, when display device 1 is installed on vehicle 2, or by the driver selecting the relative menu item, to select the language in which the information is represented, so that display device 1 may also be fitted to vehicles for export.

Regardless of the speed of vehicle 2, processing unit 7 also provides for automatically displaying diagnostic information to inform the driver, while the vehicle is moving, of more or less hazardous defects of vehicle 2, such as a fault in the braking system, a tendency of the vehicle to swerve, etc. To avoid distracting the driver's attention from the road, diagnostic information is displayed by means of short messages or images on display units 3, which may, for example, be flashed at low or high frequency to indicate the seriousness of the fault and amount of danger involved.

Processing unit 7 also provides for reconfiguring the functions assigned to control elements 10 on the steering wheel, to adapt them to the requirements of different, in particular left-handed, drivers.

Display device 1 according to the present invention may also cooperate with existing systems installed on and for already customizing certain functions of vehicle 2.

For example, some vehicles 2 are equipped with customization systems for memorizing, on a special magnetic or "microchip" card known as a "Smart Card" and which is issued to each possible driver of vehicle 2, the positions of the front seats, wing mirrors and inside rearview mirror adopted by that particular driver, and for setting the seats and mirrors to those positions when the "Smart Card" is inserted into a reader by the driver, or when the customization system detects the presence of the card on the driver and reads the data on it.

Display device 1 according to the present invention is also designed for telematic public service functions, which as yet have not come into operation.

For example, when real-time information concerning road traffic conditions or the on-road location of vehicle 2 become available in the near future, vehicle 2 may be equipped with a device for receiving this information and cooperating with processing unit 7 to display it on display units 3.

The advantages of display device 1 will be clear from the foregoing description.

In particular, display device 1 provides for adapting the size and style of the characters and graphic symbols shown on display units 3 according to the visual requirements of the driver.

Display device 1 provides for changing both the colour and the background colour of the characters and graphic symbols, to adapt the contrast between the two to the visual requirements of the driver, so that the information displayed is easier to read, especially in strong sunlight.

Display device 1 is highly reconfigurable, by permitting additions to the number of instrument gauges and optical indicators memorized in memory 5, and the integration of new functions not provided for at the design stage of display device 1.

Finally, operation of device 1 is particularly easy to learn, and the messages and information displayed are easy to read and understand.

Clearly, changes may be made to display device 1 as described and illustrated herein without, however, departing from the scope of the present invention.

For example, the visual danger signals supplied by display device 1 may be integrated with audio signals, and the various menu items may be selected in a manner other than that described, e.g. vocally.

To show which instrument gauges and which optical indicators can be changed, and what further information may be displayed, the first menu may comprise, as opposed to a number of items, a number of icons graphically representing the gauges, indicators and additional information.

Provision may be made for a different number of display units 3, which, as opposed to being fitted to dashpanel 4 of vehicle 2, may be fitted anywhere on instrument panel 9 as a whole.

"Mouse" 6 may also be located in any convenient position within easy reach of the driver, e.g. on instrument panel 9 or steering wheel 11, and may be replaced by other analog data selecting devices, such as a "joystick" or a number of dedicated push-buttons (cursor keys) also located in any convenient position within easy reach of the driver.

## Claims

1. A vehicle display device (1) comprising display means (3) for displaying information, fittable to an instrument panel (9) of a vehicle (2), and modifiable as regards information display parameters comprising display type, size, colour, and style; and control means (5-8, 10) controlling said display means (3) and modifying at least one of said display parameters; **characterized in that** said control means (5-8, 10) comprises first enabling means (20, 21) enabling a modification of the information display parameters when the vehicle (2) is stationary and disabling any modification thereof when the vehicle (2) is moving, and second enabling means (40, 41, 42) enabling different sets of driver-performable operations according to the speed of the vehicle, said driver-performable operations being performed by selecting respective items or icons displayed on said display means (3).

2. A device as claimed in Claim 1, **characterized in that** said display means (3) are screen display means.

3. A device as claimed in Claim 2, **characterized in that** said display means (3) are colour display means.

4. A device as claimed in Claim 2 or 3, **characterized in that** said display means (3) are liquid crystal display means.

5. A device as claimed in any one of the foregoing Claims, **characterized in that** said control means (5-8, 10) comprise memorizing means (5) for memorizing a number of predetermined representations of said information; selecting means (6) for selecting said representations and generating at a respective output a number of selection signals (S) indicating the selections made; and processing means (7) cooperating with said memorizing means (5) and with said selecting means (6), and controlling said display means (3) to display selected representations.

6. A device as claimed in Claim 5, **characterized in that** said selecting means (6) comprise a "mouse".

7. A device as claimed in Claim 6, **characterized in that** said "mouse" (6) is a "track-ball" type.

8. A device as claimed in Claim 5, **characterized in that** said selecting means (6) comprise a "joystick".

9. A device as claimed in any one of the foregoing Claims from 5 to 8, **characterized in that** said selecting means (6) are fittable to a portion (12) of said vehicle (2), adjacent to a gear lever (13) of the vehicle (2).

10. A device as claimed in any one of the foregoing Claims from 5 to 8, **characterized in that** said selecting means (6) are fittable to a steering wheel (11) of said vehicle (2).

11. A device as claimed in any one of the foregoing Claims from 5 to 8, **characterized in that** said selecting means (6) are fittable to said instrument panel (9) of said vehicle (2).

12. A device as claimed in any one of the foregoing Claims from 5 to 11, **characterized in that** said processing means (7) comprise:
- first acquisition means (22) for acquiring a first of said selection signals (S);
- first reading means (23) controlled by said first acquisition means (22) and for reading in said memorizing means (5) a first set of information associated with said first selection signal;
- first control means (24) receiving said first set of information and for generating first control signals for controlling said display means (3) to display said first set of information;
- second acquisition means (25) for acquiring a second of said selection signals (S) indicating information selected from said first set of information;
- second reading means (26) controlled by said second acquisition means (25) and for reading in said memorizing means (5) a second set of information associated with said second selection signal;
- second control means (27) receiving said second set of information and for generating second control signals for controlling said display means (3) to display said second set of information;
- third acquisition means (28) for acquiring at least a third of said selection signals (S) indicating information selected from said second set of information; and
- third control means (29-34) receiving said selected information and for generating third control signals for controlling said display means (3) on the basis of said selected information.

13. A device as claimed in Claim 12, **characterized by** comprising generating means (15) for generating a moving-vehicle signal; and in that said processing means (7) also comprise selective enabling means (20) having an input connected to said generating means (15), and an output connected to said first, second and third acquisition means (22, 25, 28), to said first and second reading means (23, 26), and to said first, second and third control means (24, 27, 29-34) to generate a selective enabling signal in the presence of said moving-vehicle signal.

## Patentansprüche

1. Fahrzeugdisplayvorrichtung (1), die folgendes aufweist:
eine Displayeinrichtung (3) zum Anzeigen von Informationen, die an einem Armaturenbrett (9) eines Fahrzeugs (2) anbringbar und in bezug auf Informationsdisplayparameter modifizierbar ist, die den Typ, die Größe, die Farbe und den Stil der Anzeige umfassen; und Steuereinrichtungen (5 bis 8, 10), die die Displayeinrichtung (3) steuern und mindestens einen der Displayparameter modifizieren;
**dadurch gekennzeichnet,**
**daß** die Steuereinrichtungen (5 bis 8, 10) folgendes aufweisen: erste Aktivierungseinrichtungen (20, 21), die eine Modifikation der Informationsdisplayparameter aktivieren, wenn das Fahrzeug (2) stationär ist, und jegliche Modifikation davon desaktivieren, wenn sich das Fahrzeug (2) bewegt, und zweite Aktivierungseinrichtungen (40, 41, 42), die verschiedene Sätze von vom Fahrer durchführbaren Operationen in Abhängigkeit von der Fahrzeuggeschwindigkeit aktivieren, wobei die vom Fahrer durchführbaren Operationen durch Wahl von jeweiligen auf der Displayeinrichtung (3) angezeigten Elementen oder Piktogrammen durchgeführt werden.

2. Vorrichtung nach Anspruch 1,
**dadurch gekennzeichnet,**
**daß** die Displayeinrichtung (3) eine Bildschirmdisplayeinrichtung ist.

3. Vorrichtung nach Anspruch 2,
**dadurch gekennzeichnet,**
**daß** die Displayeinrichtung (3) eine Farbdisplayeinrichtung ist.

4. Vorrichtung nach Anspruch 2 oder 3,
**dadurch gekennzeichnet,**
**daß** die Displayeinrichtung (3) eine Flüssigkristalldisplayeinrichtung ist.

5. Vorrichtung nach einem der vorhergehenden Ansprüche,
**dadurch gekennzeichnet,**
**daß** die Steuereinrichtungen (5 bis 8, 10) folgendes aufweisen: eine Speichereinrichtung (5) zum Speichern einer Anzahl von vorbestimmten Darstellungen der Informationen; eine Wähleinrichtung (6) zum Wählen der Darstellungen und Erzeugen einer Anzahl von Wählsignalen (S) an einem jeweiligen Ausgang, die die jeweils getroffene Wahl bezeichnen; und eine Verarbeitungseinrichtung (7), die mit der Speichereinrichtung (5) und mit der Wähleinrichtung (6) zusammenwirkt und die Displayeinrichtung (3) so steuert, daß diese ausgewählte Darstellungen anzeigt.

6. Vorrichtung nach Anspruch 5,
**dadurch gekennzeichnet,**
**daß** die Wähleinrichtung (6) eine "Maus" aufweist.

7. Vorrichtung nach Anspruch 6,
**dadurch gekennzeichnet,**
**daß** die "Maus" (6) vom "Rollkugel"-Typ ist.

8. Vorrichtung nach Anspruch 5,
**dadurch gekennzeichnet,**
**daß** die Wähleinrichtung (6) einen "Joystick" aufweist.

9. Vorrichtung nach einem der obigen Ansprüche 5 bis 8,
**dadurch gekennzeichnet,**
**daß** die Wähleinrichtung (6) in einem Bereich (12) des Fahrzeugs (2) in der Nähe eines Schalthebels (13) des Fahrzeugs (2) anbringbar ist.

10. Vorrichtung nach einem der obigen Ansprüche 5 bis 8,
**dadurch gekennzeichnet,**
**daß** die Wähleinrichtung (6) an einem Lenkrad (11) des Fahrzeugs (2) anbringbar ist.

11. Vorrichtung nach einem der obigen Ansprüche 5 bis 8,
**dadurch gekennzeichnet,**
**daß** die Wähleinrichtung (6) an dem Armaturenbrett (9) des Fahrzeugs (2) anbringbar ist.

12. Vorrichtung nach einem der obigen Ansprüche 5 bis 11,
**dadurch gekennzeichnet,**
**daß** die Verarbeitungseinrichtung (7) folgendes aufweist:
- eine erste Erfassungseinrichtung (22) zum Erfassen eines ersten der Wählsignale (S);
- eine von der ersten Erfassungseinrichtung (22) gesteuerte erste Leseeinrichtung (23) zum Lesen eines ersten Satzes von Informationen, die dem ersten Wählsignal zugeordnet sind, in der Speichereinrichtung (5);
- eine erste Steuereinrichtung (24), die den ersten Satz von Informationen empfängt und erste Steuersignale zum Steuern der Displayeinrichtung (3) erzeugt, um den ersten Satz von Informationen anzuzeigen;
- eine zweite Erfassungseinrichtung (25) zum Erfassen eines zweiten der Wählsignale (S), das aus dem ersten Satz von Informationen ausgewählte Informationen bezeichnet;
- eine von der zweiten Erfassungseinrichtung (25) gesteuerte zweite Leseeinrichtung (26) zum Lesen eines zweiten Satzes von Informationen, der dem zweiten Wählsignal zugeordnet ist, in der Speichereinrichtung (5) ;
- eine zweite Steuereinrichtung (27), die den zweiten Satz von Informationen empfängt und zweite Steuersignale zum Steuern der Displayeinrichtung (3) erzeugt, um den zweiten Satz von Informationen anzuzeigen;
- eine dritte Erfassungseinrichtung (28) zum Erfassen von mindestens einem dritten der Wählsignale (S), das aus dem zweiten Satz von Informationen ausgewählte Informationen bezeichnet; und
- dritte Steuereinrichtungen (29 bis 34), die die ausgewählten Informationen empfangen und dritte Steuersignale zum Steuern der Displayeinrichtung (3) auf der Basis der ausgewählten Informationen erzeugen.

13. Vorrichtung nach Anspruch 12,
**dadurch gekennzeichnet,**
**daß** sie eine Erzeugungseinrichtung (15) zum Erzeugen eines Fahrzeugbewegungssignals aufweist; und daß die Verarbeitungseinrichtung (7) ferner eine selektive Aktivierungseinrichtung (20) aufweist, von der ein Eingang mit der Erzeugungseinrichtung (15) und ein Ausgang mit der ersten, der zweiten und der dritten Erfassungseinrichtung (22, 25, 28), mit der ersten und zweiten Leseeinrichtung (23, 26) und mit der ersten, der zweiten und der dritten Steuereinrichtung (24, 27, 29 bis 34) verbunden ist, um ein selektives Aktivierungssignal bei Anwesenheit des Fahrzeugbewegungssignals zu erzeugen.

## Revendications

1. Dispositif d'affichage (1) pour véhicule comprenant des moyens d'affichage (3) pour afficher des informations, pouvant être monté sur une planche de bord (9) d'un véhicule (2) et pouvant être modifié en ce qui concerne les paramètres d'affichage des informations comprenant le type, la taille, la couleur et le style d'affichage ; et des moyens de commande (5 à 8, 10) commandant lesdits moyens d'affichage (3) et modifiant au moins un desdits paramètres d'affichage ;
**caractérisé en ce que** lesdits moyens de commande (5 à 8, 10) comprennent des premiers moyens de validation (20, 21) validant une modification des paramètres d'affichage d'informations lorsque le véhicule (2) est à l'arrêt et invalidant toute modification des paramètres lorsque le véhicule (2) est mobile, et des seconds moyens de validation (40, 41, 42) validant différents ensembles d'opérations réalisables par le conducteur selon la vitesse du véhicule, lesdites opérations réalisables par le conducteur étant réalisées en sélectionnant des options ou des icônes respectives affichées sur lesdits moyens d'affichage (3).

2. Dispositif selon la revendication 1, **caractérisé en ce que** lesdits moyens d'affichage (3) sont des moyens d'affichage sur écran.

3. Dispositif selon la revendication 2, **caractérisé en ce que** lesdits moyens d'affichage (3) sont des moyens d'affichage en couleur.

4. Dispositif selon la revendication 2 ou 3, **caractérisé en ce que** lesdits moyens d'affichage (3) sont des moyens d'affichage à cristaux liquides.

5. Dispositif selon l'une quelconque des revendications précédentes, **caractérisé en ce que** lesdits moyens de commande (5 à 8, 10) comprennent un moyen de mémorisation (5) pour stocker un certain nombre de représentations prédéterminées desdites informations ; un moyen de sélection (6) pour sélectionner lesdites représentations et générer, au niveau d'une sortie respective, un certain nombre de signaux de sélection (S) indiquant les sélections effectuées, et un moyen de traitement (7) fonctionnant en coopération avec ledit moyen de mémorisation (5) et avec ledit moyen de sélection (6), et commandant lesdits moyens d'affichage (3) pour afficher des représentations sélectionnées.

6. Dispositif selon la revendication 5, **caractérisé en ce que** ledit moyen de sélection (6) comprend une "souris".

7. Dispositif selon la revendication 6, **caractérisé en ce que** ladite "souris" (6) est du type à boule de commande.

8. Dispositif selon la revendication 5, **caractérisé en ce que** ledit moyen de sélection (6) comprend une manette de commande.

9. Dispositif selon l'une quelconque des revendications précédentes 5 à 8, **caractérisé en ce que** ledit moyen de sélection (6) peut être monté sur une partie (12) dudit véhicule (2), en étant adjacent à un levier (13) de changement de vitesses du véhicule (2).

10. Dispositif selon l'une quelconque des revendications précédentes 5 à 8, **caractérisé en ce que** ledit moyen de sélection (6) peut être monté sur un volant (11) dudit véhicule (2).

11. Dispositif selon l'une quelconque des revendications précédentes 5 à 8, **caractérisé en ce que** ledit moyen de sélection (6) peut être monté sur ladite planche de bord (9) dudit véhicule (2).

12. Dispositif selon l'une quelconque des revendications précédentes 5 à 11, **caractérisé en ce que** ledit moyen de traitement (7) comprend :
- un premier moyen d'acquisition (22) pour capter un premier desdits signaux de sélection (S) ;
- un premier moyen de lecture (23) commandé par ledit premier moyen d'acquisition (22) et servant à lire dans ledit moyen de mémorisation (5) un premier ensemble d'informations associé audit premier signal de sélection ;
- un premier moyen de commande (24) recevant ledit premier ensemble d'informations et servant à générer des premiers signaux de commande pour commander lesdits moyens d'affichage (3) et afficher ledit premier ensemble d'informations ;
- un deuxième moyen d'acquisition (25) pour capter un deuxième desdits signaux de sélection (S) indiquant des informations sélectionnées à partir dudit premier ensemble d'informations ;
- un second moyen de lecture (26) commandé par ledit deuxième moyen d'acquisition (25) et servant à lire dans ledit moyen de mémorisation (5) un deuxième ensemble d'informations associé audit deuxième signal de sélection ;
- un deuxième moyen de commande (27) recevant ledit deuxième ensemble d'informations et servant à générer des deuxièmes signaux de commande pour commander lesdits moyens d'affichage (3) et afficher ledit deuxième ensemble d'informations ;
- un troisième moyen d'acquisition (28) pour capter au moins un troisième desdits signaux de sélection (S) indiquant des informations sélectionnées à partir dudit deuxième ensemble d'informations ; et
- un troisième moyen de commande (29 à 34) recevant lesdites informations sélectionnées et servant à générer des troisièmes signaux de commande pour commander lesdits moyens d'affichage (3) sur la base desdites informations sélectionnées.

13. Dispositif selon la revendication 12, **caractérisé en ce qu'**il comprend un moyen de génération (15) servant à générer un signal du véhicule mobile, et **en ce que** ledit moyen de traitement (7) comprend également un moyen de validation sélective (20) ayant une entrée connectée audit moyen de génération (15), et une sortie connectée auxdits premier, deuxième et troisième moyens d'acquisition (22, 25, 28), auxdits premier et second moyens de lecture (23, 26) et auxdits premier, deuxième et troisième moyens de commande (24, 27, 29 à 34), pour générer un signal de validation sélective en présence dudit signal du véhicule mobile.
